# FASCICULE DE BREVET EUROPEEN

(11) **EP 1 174 254 B1**
(45) Date de publication et mention de la délivrance du brevet: **26.10.2005**
(21) Numéro de dépôt: 01117198.0
(22) Date de dépôt: 16.07.2001
(51) Int. Cl.: B24B 5/36

(54) **Machine de rechapage de pneumatique**
Vorrichtung zum Runderneuern von Reifen
Apparatus for retreading tires

(30) Priorité: 21.07.2000 FR 0009804
(43) Date de publication de la demande: 23.01.2002
(73) Titulaire: RECAMIC S.A., 1762 Givisiez (CH)
(72) Inventeur: Reppel, Emil Willi, 311 42 Falkenberg (SE)
(74) Mandataire: Cohen, Sylvia

(56) Documents cités:
- CA-A- 1 157 103
- US-A- 2 707 851
- US-A- 2 945 534
- US-A- 3 528 476
- US-A- 4 515 200
- US-A- 5 307 854

## Description

La présente invention a pour objet une machine destinée au rechapage de pneumatiques. L'invention concerne plus particulièrement une machine modulable susceptible de constituer une machine de râpage, une machine de châpage d'un pneumatique ou une machine combinée comportant une râpeuse mais également des organes d'application et de rouletage de bandes de roulement.

On sait que la plupart des pneumatiques peuvent être rechapés, c'est-à-dire qu'il est possible, après l'usure normale de la bande de roulement, de remplacer cette bande, et même certaines nappes de renfort de la ceinture du pneumatique. Ces opérations sont très courantes pour les pneumatiques de véhicules de transport tels que les poids lourds et peuvent s'effectuer dans de véritables usines ou dans des ateliers de taille plus ou moins importante où les problèmes d'encombrement deviennent capitaux.

De nombreuses machines destinées à enlever les restes de la bande de roulement des pneumatiques usées, opération dite de " déchapage " ont été proposées ainsi que des machines dites de " châpage " destinées à appliquer une nouvelle bande de roulement sur les pneumatiques ayant été préalablement " déchapés ".

Aujourd'hui on cherche de plus en plus à avoir des machines " flexibles " susceptibles de rechaper des pneumatiques de dimensions diverses et en particulier des pneumatiques de plus en plus larges, indifféremment pour des pneumatiques dont la bande de roulement s'étend uniquement sur le sommet ou des pneumatiques dont la bande de roulement recouvre également les épaules du pneumatique, une telle bande de roulement est dite " à bavettes ". Or cette double contrainte dimensionnelle et géométrique, pose de réels problèmes à la fois en terme d'encombrement de la machine, de faisabilité pour les bandes à bavette et de qualité du rechapage réalisé.

En effet, les machines de rechapage couramment vendues dans le commerce possèdent un bâti avec des flasques latéraux verticaux encadrant le pneumatique généralement disposé verticalement. Il est donc nécessaire pour qu'une telle machine puisse rechaper des pneumatiques de grande largeur d'augmenter considérablement la taille de ladite machine et donc son encombrement.
De plus, la présence de ces montants latéraux rend difficile l'accès aux épaules du pneumatique. On fait alors souvent appel pour le déchapage à un robot porteur d'une râpe, mais là encore une augmentation de la taille du pneumatique entraîne une augmentation de la longueur et de la rigidité du bras du robot porteur de la râpe et par conséquent entraîne des problèmes de stabilité et de vibrations nuisant considérablement à la qualité et à la précision du travail réalisé par une telle machine.

D'autres types de machines ont été proposés telles que celle décrite, à titre d'exemple, dans la publication AU-1 528 470 dans laquelle le bâti de la machine comporte un mandrin rotatif et fixe en translation, porteur du pneumatique devant lequel vient se déplacer en translation axiale et radiale par rapport à l'axe du mandrin, une râpe rotative guidée par l'intermédiaire d'un gabarit. On connaît l'inconvénient de l'utilisation de gabarit lié à la nécessité du changement de gabarit pour accompagner un changement de dimension du pneumatique à rechaper et donc à des démontages et montages successifs. Par ailleurs, les problèmes de longueur du bras porteur de la râpe et donc de stabilité et vibration ne sont pas résolu ici, l'accessibilité aux épaules du pneumatique étant limitée du fait même de la structure de la machine.

La publication EP-0 955 154 présente une solution différente dans laquelle la machine présente un mandrin rotatif déplaçable en translation selon un axe vertical perpendiculaire à l'axe de rotation du mandrin et des outils de râpage rotatifs montés au-dessus du pneumatique, également déplaçables en translation horizontale parallèlement à l'axe de rotation du mandrin, l'axe des outils de râpage étant perpendiculaire à celui du mandrin (figure 4 de la publication) pour permettre le râpage des épaules du pneumatique à rechaper le cas échéant.

La combinaison de ces deux mouvements de translation permet effectivement de réaliser le déchapage d'un pneumatique ayant une bande à bavette qui nécessite la réalisation d'un profil complexe présentant un rayon de courbure au niveau du sommet, d'autres rayons de courbure au niveau des épaules et enfin un trapèze pour réaliser la descente des épaules aux flancs. Cependant cette machine n'apporte pas de solutions aux problèmes de vibrations et de stabilité. En effet, pour un pneumatique de grande dimension donc plus lourd, le mouvement vertical du mandrin peut entraîner des problèmes de stabilité, voire risquer d'entraîner de légères flexions de l'axe de rotation du mandrin. De plus, afin de permettre réellement un accès sur les épaules disposées face à la potence sur laquelle le mandrin est monté à translation, il est nécessaire de prévoir d'éloigner suffisamment le pneumatique de la potence, axialement par rapport à l'axe du mandrin, ce qui augmente les risques que se produisent un tel phénomène.
Il faut également pour que la machine fonctionne pour un pneumatique très large, avoir prolongé les rails de guidage des outils de râpage suspendus au-dessus dudit pneumatique entraînant alors des vibrations plus importantes lors de la translation et de l'actionnement de ces outils de râpage.

L'invention vise à pallier ces inconvénients.

L'invention a également pour objet une nouvelle machine de rechapage qui soit modulable.

On entendra dans ce qui suit par " outils de rechapage " d'un pneumatique : des outils de râpage, des outils d'application d'une nouvelle bande de roulement sur le pneumatique ou tout autre outil susceptible d'être lors du rechapage d'un pneumatique, par exemple un outil de pose d'une gomme de liaison etc...

Selon l'invention, la machine destinée au rechapage de pneumatiques ayant un bâti comprenant au moins deux structures associées dont une première structure de support d'un pneumatique à rechaper qui comporte un mandrin de support du pneumatique rotatif autour d'un axe de rotation, le mandrin étant monté à translation en fonctionnement sur ladite structure, et dont une deuxième structure portant des outils de rechapage du pneumatique montés à translation en fonctionnement sur ladite deuxième structure dans une direction sensiblement perpendiculaire à celle de translation en fonctionnement du mandrin, est caractérisé par le fait que la direction de translation en fonctionnement du mandrin est parallèle à l'axe de rotation dudit mandrin.

Le mouvement de translation du mandrin parallèlement à son axe de rotation permet d'éviter d'exercer sur le mandrin des forces latérales et de garder le barycentre du pneumatique sur un même axe parallèle audit axe de rotation. On évite ainsi les risques de déformation du mandrin tout en assurant une grande stabilité lors de la translation de ce dernier, cette stabilité étant renforcée par le fait que le poids du pneumatique est toujours supporté par la base du bâti c'est-à-dire le sol.

Par ailleurs, la séparation de la machine en différentes structures avec une structure de base portant le pneumatique à rechaper, permet d'envisager une modularité de la machine particulièrement intéressante pour pouvoir faire évoluer la machine en lui ajoutant par exemple de nouveaux modules.

Avantageusement, le mandrin est monté en translation sur deux rails de guidage parallèles à son axe de rotation, les deux rails étant disposés symétriquement par rapport au plan contenant l'axe de rotation du mandrin et sensiblement perpendiculaire au plan contenant la surface des rails. Cette disposition symétrique accentue la grande stabilité de la machine grâce au positionnement de l'axe des barycentres du pneumatique entre ces deux rails au cours des déplacements dudit pneumatique.

D'autres caractéristiques et avantages de l'invention apparaîtront à la lecture d'un exemple de réalisation d'une machine de déchapage conforme à l'invention, en référence au dessin annexé dans lequel :
- la figure 1 est une vue en élévation d'une machine conforme à l'invention,

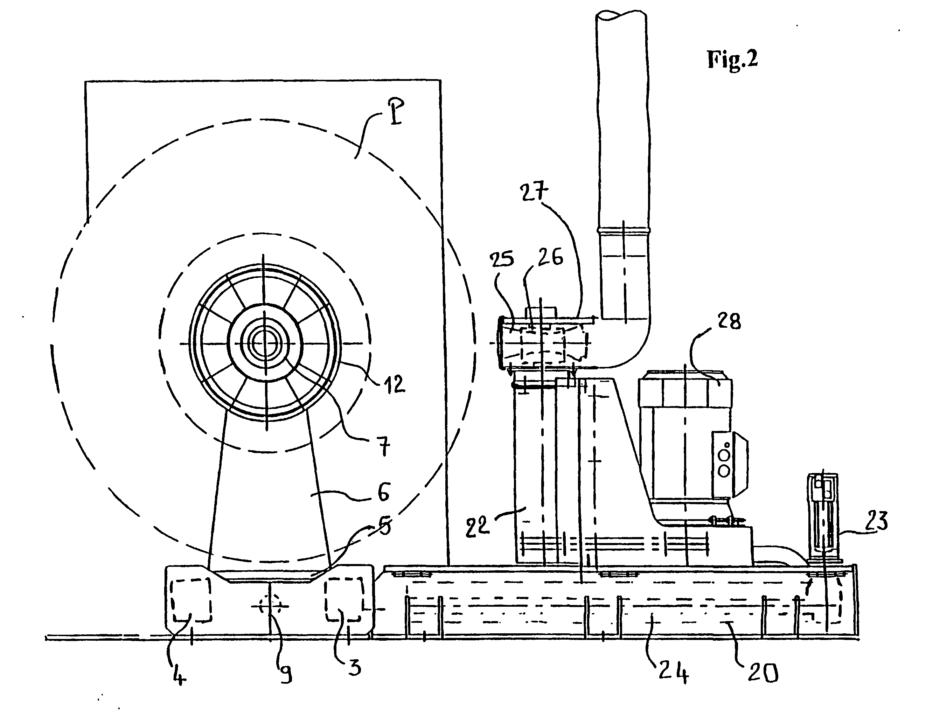

- la figure 2 est une vue de côté de la machine représentée sur la figure 1 selon la flèche F.

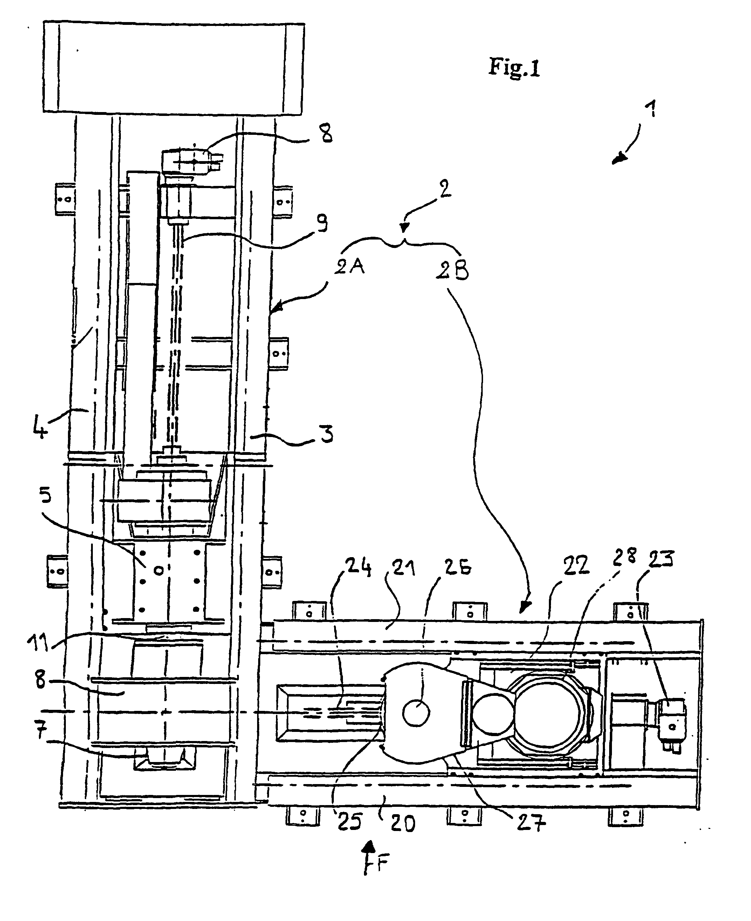

Selon la figure 1, la machine 1 possède un bâti rigide horizontal 2 comprenant deux structures modulaires horizontales perpendiculaires entre elles 2A et 2B portant respectivement le pneumatique et la râpeuse, solidarisées ensemble.

On décrira ici une machine destinée à réaliser le déchapage du pneumatique P, ce qui ne saurait limiter l'invention à cette seule disposition. La machine pouvant comprendre également un module réalisant le châpage avec, par exemple, une troisième structure disposée à l'opposé de la râpeuse. On peut également envisager d'autres configurations de la machine permettant par exemple d'avoir uniquement la structure de châpage ou au contraire une râpeuse et plusieurs modules de châpage et/ou un module de rouletage. La conception de cette machine de rechapage ayant une grande stabilité et une grande précision quelle que soit la dimension des pneumatiques à rechaper permet en effet d'obtenir une machine tout à fait modulable à partir du module de base supportant le pneumatique à rechaper.

La structure 2A comporte deux rails 3 et 4 de guidage d'un chariot 5 possédant un montant vertical 6 sur lequel est monté un mandrin 7 de support d'un pneumatique, monté sur un axe de rotation 11 et comportant une jante 12 extensible, le mandrin 7 permettant le montage de pneumatique de dimensions très différentes, allant du tourisme aux poids lourds (bien entendu il peut être utile de changer la dimension de la jante 12). Un moteur 8, associé à une vis sans fin 9 permet d'actionner le chariot pour provoquer sa translation le long des rails 3 et 4, alors qu'un second moteur 10 actionne l'axe de rotation 11 du mandrin 7 afin de permettre la rotation de ce dernier. Comme on le reverra plus précisément dans ce qui suit, il est utile d'utiliser un moteur permettant un positionnement très précis tel qu'un moteur à contrôle numérique.

Les rails de guidage 3 et 4 sont disposés parallèlement à l'axe de rotation 11 du mandrin 7 et disposés symétriquement par rapport au plan vertical contenant cet axe. L'écartement des rails 3 et 4 est choisi en tenant compte de l'encombrement de la machine et de la stabilité de la structure. On peut ainsi envisager d'avoir une distance entre les deux rails qui correspondent sensiblement au diamètre de la jante 12. La longueur des rails peut être déterminée en fonction du nombre de modules susceptibles d'être disposés perpendiculairement à cette structure.

La réalisation de cette structure 2A de support d'un pneumatique avec un mouvement de translation parallèle à l'axe du pneumatique permet de ne pas avoir lors de la translation de risque de déformation ou de vibration du mandrin dû à un poids important d'un pneumatique car on garde le barycentre de ce dernier sur un même axe. De plus, la disposition de ces deux rails symétriques permet d'assurer une très grande stabilité à cette ligne de barycentre. Soulignons également que l'ensemble du poids est directement supporté par la structure c'est-à-dire par la dalle même de l'usine ou de l'atelier de fabrication.

Par ailleurs, contrairement aux machines destinées au rechapage rencontrées généralement dans le commerce, le pneumatique monté sur le mandrin est aisément accessible sans être mis dans un cadre ou dans un bâti ayant des montants verticaux qui limitent les possibilités d'accès pour d'autres outils au pneumatique.

La structure 2B comporte elle aussi deux rails 20, 21 perpendiculaires aux rails 3 et 4 et qui guident un second chariot 22 monté ainsi à translation perpendiculairement à celle du mandrin 7 et également actionné par un moteur à contrôle numérique 23 qui entraîne le chariot 22 à l'aide d'une deuxième vis sans fin 24.

Sur le deuxième chariot 22 sont montés les outils de râpage 25 avec un moteur 28 et une transmission pour entraîner l'outil de râpage, de sorte que ces derniers sont disposés dans le plan médian du pneumatique à rechaper. Ces outils de râpage 25 sont constitués de façon classique par une série de lames circulaires montées autour d'un axe de rotation 26, cet axe 26 étant disposé verticalement. Bien entendu, on peut envisager l'utilisation d'outils de râpage différents de ceux décrits précédemment.

De la même façon que pour le mandrin 7, les rails 20 et 21 sont disposés de part et d'autre du plan vertical contenant l'axe de rotation 26 et perpendiculaire à l'axe de rotation 11 du mandrin 7. La râpeuse 25 est recouverte d'un capot 27 permettant de limiter l'éparpillement des poussières générées lors du râpage, une aspiration étant ensuite prévue pour évacuer ces poussières. Pour assurer une bonne stabilité et éviter des vibrations inopportunes, on peut espacer les deux rails 20 et 21 de sorte que la distance les séparant soit fonction de la puissance du moteur 28 d'actionnement des outils de râpage. Comme pour le mandrin de la structure 2A, la présence de ces deux rails espacés confère à la râpeuse une très bonne stabilité. De plus, le chariot 22 ne se déplaçant que sur un seul axe, on a une très grande stabilité, précision et un abaissement important du niveau de bruit.

La combinaison des deux mouvements de translation horizontale des mandrin et râpeuse permet de façon claire à la râpeuse de pouvoir entrer en contact en tout point de la surface de la bande de roulement, des épaules du pneumatique et également des flancs du pneumatique.

On voit nettement que le rechapage d'un pneumatique de grande dimension ne pose pas de problème que ce soit du point de vue de ses dimensions ou de son poids puisqu'on arrive à obtenir une machine stable sans engendrer de " vibrations " qui est, de plus, relativement silencieuse, le seul facteur a fixé préalablement étant la longueur des rails.

Bien entendu, le fonctionnement d'une machine conforme à l'invention met en oeuvre des moyens de contrôle d'axes et une programmation adéquate qui ne sera pas détaillée ici puisqu'elle ne constitue pas l'objet de l'invention.

## Revendications

1. Machine dont la fonction est le rechapage de pneumatiques ayant un bâti (2) comprenant au moins deux structures (2A, 2B) associées dont une première structure (2A) de support d'un pneumatique à rechaper qui comporte un mandrin de support (7) du pneumatique rotatif autour d'un axe de rotation (11), le mandrin (7) étant monté à translation en fonctionnement sur ladite structure (2A), et dont une deuxième structure (2B) portant des outils de rechapage (25) du pneumatique montés à translation en fonctionnement sur ladite deuxième structure dans une direction sensiblement perpendiculaire à celle de la translation en fonctionnement du mandrin (7), **caractérisé par le fait que** la direction de la translation en fonctionnement du mandrin (7) est parallèle à l'axe de rotation (11) dudit mandrin.

2. Machine selon la revendication 1, dans laquelle le mandrin (7) est monté en translation sur deux rails de guidage (3, 4) parallèles à l'axe de rotation (11) dudit mandrin, les deux rails (3, 4) étant disposés symétriquement par rapport au plan contenant l'axe de rotation (11) du mandrin (7) et sensiblement perpendiculaire au plan contenant la surface des rails (3, 4).

3. Machine selon l'une quelconque des revendications 1 ou 2, dans laquelle les outils de rechapage (25) sont montés à translation en fonctionnement sur deux rails (20, 21) disposés symétriquement par rapport au plan contenant le centre des outils de rechapage (25) et sensiblement perpendiculaire au plan contenant la surface des rails (20, 21).

4. Machine selon l'une quelconque des revendications 1 à 3, dans laquelle les mouvements de translation en fonctionnement des outils de rechapage (25) et du mandrin (7) sont situés dans un même plan horizontal.

5. Machine selon l'une quelconque des revendications 1 à 4, dans laquelle la deuxième structure (2B) comprend en plus des outils de rechapage (25), des organes de rouletage d'une nouvelle bande de roulement pour le pneumatique à rechaper après son application sur ce dernier.

6. Machine selon l'une quelconque des revendications 1 à 5, dans laquelle les outils de rechapage sont constitués par des outils de râpage (25, 27) du pneumatique à rechaper.

7. Machine selon la revendication 6, dans laquelle les outils de râpage (25, 27) comprennent une série de lames circulaires montées à rotation autour d'un axe de rotation (26), ledit axe de rotation étant disposé sensiblement perpendiculairement à la direction de translation desdits outils.

8. Machine selon l'une quelconque des revendications 1 à 5, dans laquelle les outils de rechapage sont constitués par des outils d'application d'une bande de roulement.

9. Machine selon l'une quelconque des revendications 1 à 8, comprenant une ou plusieurs autres structures portant respectivement des outils de rechapage du pneumatique à rechaper montés respectivement à translation en fonctionnement sur la structure correspondante dans une direction sensiblement perpendiculaire à celle de la translation en fonctionnement du mandrin.

## Patentansprüche

1. Vorrichtung, deren Aufgabe die Runderneuerung von Luftreifen ist, die ein Gestell (2) mit mindestens zwei miteinander verbundenen Strukturen (2A, 2B) umfasst, eine erste Struktur (2A) zur Aufnahme eines Luftreifens, der runderneuert werden soll, die einen Dorn (7) zur Aufnahme des Luftreifens umfasst, der um eine Drehachse (11) drehbar ist, wobei der Dorn (7) im Betrieb auf der Struktur (2A) in Translationsbewegung versetzt wird, und eine zweite Struktur (2B), die die Abschälwerkzeuge (25) zum Abschälen des Luftreifens trägt, die im Betrieb in der zweiten Struktur in einer zur Translationsbewegung des Dorns (7) im Betrieb in etwa senkrechten Richtung in Translationsbewegung versetzt wird,
**dadurch gekennzeichnet, dass**
die Translationsrichtung des Dorns (7) im Betrieb parallel zur Drehachse (11) des Dorns verläuft.

2. Vorrichtung nach Anspruch 1, wobei der Dorn (7) auf zwei Führungsschienen (3, 4), die parallel zur Drehachse (11) des Dorns verlaufen, in Translationsbewegung versetzt wird, wobei die Schienen (3, 4) in Bezug auf die Ebene symmetrisch angeordnet sind, die die Drehachse (11) des Dorns (7) enthält und in etwa senkrecht zur Ebene verläuft, die die Oberfläche der Schienen (3, 4) enthält.

3. Vorrichtung nach einem der Ansprüche 1 oder 2, wobei die Abschälwerkzeuge (25) im Betrieb auf zwei Schienen (20, 21) in Translationsbewegung versetzt werden, die in Bezug auf die Ebene symmetrisch angeordnet sind, die das Zentrum der Abschälwerkzeuge (25) enthält und in etwa senkrecht zur Ebene verläuft, die die Oberfläche der Schienen (20, 21) enthält.

4. Vorrichtung nach einem der Ansprüche 1 bis 3, wobei die Translationsbewegungen der Abschälwerkzeuge (25) und des Dorns (7) in einer horizontalen Ebene erfolgen.

5. Vorrichtung nach einem der Ansprüche 1 bis 4, bei der die zweite Struktur (2B) neben den Abschälwerkzeugen (25) Einrichtungen zum Aufwalzen eines neuen Laufstreifens für den Luftreifen, der runderneuert werden soll, nach dem Auflegen des Laufstreifens umfasst.

6. Vorrichtung nach einem der Ansprüche 1 bis 5, bei dem die Werkzeuge zum Runderneuern aus Werkzeugen (25, 27) zum Abschälen des Luftreifens, der runderneuert werden soll, bestehen.

7. Vorrichtung nach Anspruch 6, wobei die Abschälwerkzeuge (25, 27) eine Reihe von kreisförmigen Klingen umfassen, die um eine Drehachse (26) in Rotationsbewegung versetzt werden, wobei die Drehachse in etwa senkrecht zur Translationsrichtung der Werkzeuge angeordnet ist.

8. Vorrichtung nach einem der Ansprüche 1 bis 5, wobei die Werkzeuge für die Runderneuerung aus Werkzeugen zum Auflegen eins Laufstreifens bestehen.

9. Vorrichtung nach einem der Ansprüche 1 bis 8, die eine oder mehrere weitere Strukturen aufweist, die jeweils Werkzeuge für die Runderneuerung des Luftreifens, der runderneuert werden soll, tragen, die an der entsprechenden Struktur im Betrieb in eine in etwa senkrecht zur Translationsrichtung des Dorns verlaufenden Richtung in Translationsbewegung versetzt werden.

## Claims

1. Machine designed for retreading of tyres, with a frame (2) comprising at least two associated structures (2A, 2B), including a first support structure (2A) for a tyre to be retreaded which comprises a mandrel (7) for support of the tyre, which rotates around a rotational shaft (11), the mandrel (7) being mounted in translation in operation on the said structure (2A), and a second structure (2B) bearing tools for retreading (25) of the tyre, which are mounted in translation in operation on the said second structure in a direction substantially perpendicular to that of the translation in operation of the mandrel (7), **characterised by** the fact that the direction of translation in operation of the mandrel (7) is parallel to the rotational shaft (11) of the said mandrel.

2. Machine according to claim 1, wherein the mandrel (7) is mounted in translation on two guide rails (3, 4) parallel to the rotational shaft (11) of the said mandrel, the two rails (3, 4) being disposed symmetrically relative to the plane which contains the rotational shaft (11) of the mandrel (7), and substantially perpendicular to the plane which contains the surface of the rails (3, 4).

3. Machine according to any one of claims 1 or 2, wherein the retreading tools (25) are mounted in translation in operation on two rails (20, 21) disposed symmetrically relative to the plane which contains the centre of the retreading tools (25), and substantially perpendicular to the plane which contains the surface of the rails (20, 21).

4. Machine according to any one of claims 1 to 3, wherein the movements of translation in operation of the retreading tools (25) and of the mandrel (7) are situated in a single horizontal plane.

5. Machine according to any one of claims 1 to 4, wherein, in addition to the retreading tools (25), the second structure (2B) comprises units for rolling a new tread for the tyre to be retreaded, after the tread has been applied to the latter.

6. Machine according to any one of claims 1 to 5, wherein the retreading tools consist of rasping tools (25, 27) for the tyre to be retreaded.

7. Machine according to claim 6, wherein the rasping tools (25, 27) comprise a series of circular blades, which are mounted such as to rotate around a rotational shaft (26), the said rotational shaft being disposed substantially perpendicularly to the direction of translation of the said tools.

8. Machine according to any one of claims 1 to 5, wherein the retreading tools consist of tools for application of a tread.

9. Machine according to any one of claims 1 to 8, comprising one or more other structures, which bear respectively tools for retreading the tyre to be retreaded, which are mounted respectively such as to translate in operation on the corresponding structure, in a direction which is substantially perpendicular to that of the translation in operation of the mandrel.
